# EUROPEAN PATENT APPLICATION

(11) **EP 3 751 441 A1**
(43) Date of publication of application: **16.12.2020**
(21) Application number: 18904620.4
(22) Date of filing: 08.02.2018
(51) Int. Cl.: G06F 21/62

(54) **PERSONAL DATA APPLICATION AND PERSONAL DATA APPLICATION CONTROL METHOD**

(71) Applicant: Matsunaga, Chikara, Hyogo 6580032 (JP)
(72) Inventor: Matsunaga, Chikara, Hyogo 6580032 (JP)
(74) Representative: Horn Kleimann Waitzhofer Patentanwälte PartG mbB
(86) International application number: PCT/JP2018/004319
(87) International publication number: WO 2019/155568

(57) **Abstract**

Problem to be solved: To provide a personal data application system with which it is possible to manage, over a cloud system or other network, persona data such as electronic clinical records, electronic health insurance cards, electronic passports, and electronic ID cards, and to thereby prevent unauthorized use thereof.

Solution: An opening authentication code and a closing authentication code, which is for performing normal termination and exiting, are set for various personal data application files that are to be used by a personal data application. The persona data application comprises: an application file opening function for opening a personal data application file once the opening authentication code has been inputted; an application file editing function for accepting data editing done by another authorized person; and an application file closing function for establishing the data editing content provided by the application file editing function once the closing authentication code has been inputted, and the performing normal termination and exiting.

## Description

### TECHNICAL FIELD

This invention relates to an application processed on a computer system. Especially, this invention relates to an application processing with security by the normal operation in which it is opened, used and closed in a normal state.

The use of the computer system is not limited, and can be employed for various uses in various technical fields. For example, the computer system using the application can be employed in an administration-related file control system, in which administration-related file indicates the content of recording information or qualification information on the administration of the user individual. For example, this can be an electronic medical record file, an electronic insurance record file, an electronic driver's license file, an electronic resident card file and an electronic seal registration file etc.

### BACKGROUND ART

The administration-related public record medium, for example, an insurance card, a driver's license card, a resident card, a seal registration card, etc. showing the contents of the conventional personal information or qualification information of the user individual is held by each user person in a conventional paper-based card. It may be presented to an administration institution participant or a medical worker if necessary, and is used for administration service handling and private service handling.

In recent years, cloud systems are becoming popular. Various data are managed and stored on the cloud system. It is assumed that an administration-related certificate indicating the content of the administration record information or the qualification information of the user individual is also converted into an electronic file, and managed and stored on the cloud system as an individual data application file recorded with data of the administration-related certificate.

When managing and storing personal data application files such as administration-related certificate data on a cloud system, security, usability, and operability are becoming problems in the actual use.

Regarding the security, the security enhancement for the individual data application in file browsing, data editing, and the like needs to be taken into consideration in addition to the general security provided by the general cloud system to protect personal information and prevent personal information alteration.

In a computer system, various applications are processing, and various security measures are introduced for ensuring the security. There are various security measures. For example, a well-known security measure requests the input of the secret code information such as a password at the beginning operation of the application file to open. By this password security, the right person who has authority to access the application file used in the application can access and open the application file. For example, password input is requested by keyboard. For example, both password input and identification code information input from the IC card are requested. For example, both password input and biological information such as fingerprint and vein pattern from user are requested according to the security level. Furthermore, the application file can be opened on the condition that several authority persons' secret code information is input independently and identified successfully. A single person's secret code information is not enough to open the application file.

As shown above, the conventional application that has high level security to open the application file for operation is known in the prior art.

Once the application and application file are opened to be operated, the user can use application and data input and data editing via the application. During the application processing, another password or identification information input may be requested independently if user would like to start to use another special function beyond currently given authority.

Such conventional security measures for opening the application file and starting the special function beyond currently given authority are known in the prior art. However, there is no special security measure for closing the application file after use of the application nor ending the use of the special function in the prior art. There is no example for employing the security measure for requesting input password nor identification code information. The conventional application is simply request pushing or touching the command button such as "End button" and "Close button" or inputting the end command via keyboard.

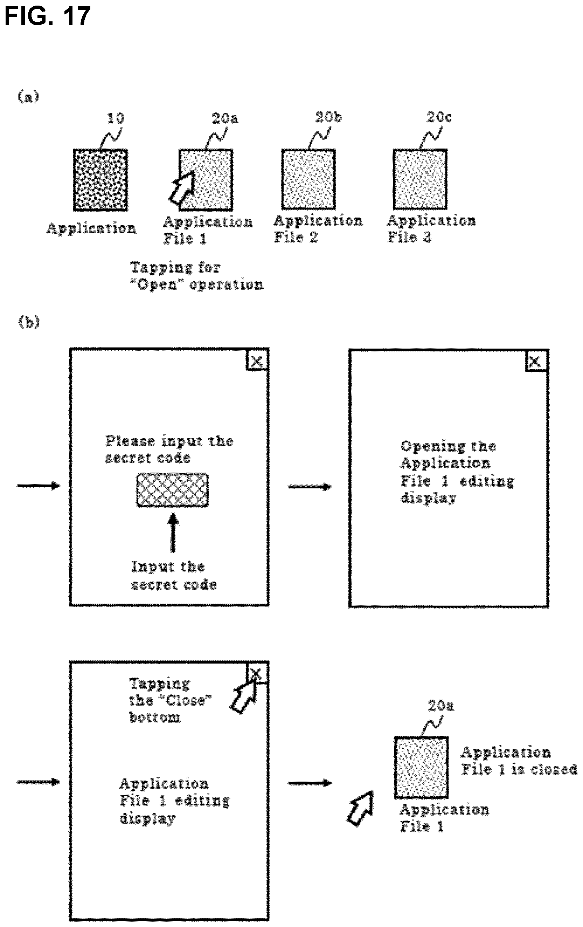

Fig. 17 is a schematic view showing the operation of the general application for starting and opening the application file, using, then closing. It is an example showing the typical operation for opening and closing the application file.

As shown in Fig. 17 (a), application 10 is installed to the computer system. When the user starts to use the application 10, the user selects the icon of the application 10 displaying onto the monitor by the pointing device such as mouse. With the user input application file open command by the double click operation, the application 10 is started.

In this case, several application files such as 20a, 20b, 20c that can be operated by the application 10 are installed to the computer system, and the corresponding icons are displayed on the monitor. The user selects the icon of the application file 20 by the pointing device such as a mouse and conducts the double click operation, and the selected application file 20 is opened by the application 10. The application file 20 is opened by the application 10 to be operable, and current data contents are displayed onto the monitor.

If the application file 20 has a security measure for requesting password input, a password input column pops-up for confirming the use authority as shown in the upper figure of Fig.17 (b). As shown above, password input may be requested if the user starts application 10 and opens application file 20 for operating in the prior art. If higher security is combined, the input of the identification information from IC card and the input of the biological information are requested besides the password input.

As shown in the upper figure of Fig. 17 (b), if the user inputs requested password and code information for opening the application file 20 via keyboard or other input devices, and the authentication process is identified successfully to fulfill the requested security level, the application file 20 is opened normally.

Next, as shown in the lower figure of Fig.17 (b), when the user finishes the desired operation through the application file 20, the user can simply close the application file 20 by pushing the command button or the pull-down menu such as "End button" and "Close button" by the pointing device such as mouse. The application 10 and the application file 20 are simply finished and closed normally.

The conventional application 10 does not request any input for special password and ID information when closing the application file 20. The conventional application 10 finishes simply and closes the application file 20 simply.

As shown above, when accessing the application file 20, various information input is requested according to the employed security level for confirming the authentication of the user at the opening of the application file 20. However, once the authentication check is conducted at the opening event, it is assumed that the right person who satisfied authentication keeps on using under his authentication, and the finishing operation and closing operation of the application file 20 is conducted under his authentication. Therefore, the conventional application 10 does not request any special input of the password and ID information at the closing operation of the application file 20. Of course, there is a possibility that the application 10 and application file 20 faces a forced termination abnormally by becoming inoperable due to some operation error or system error. However, when the operation reaches to the end normally without any operation error nor system error, the application 10 can be simply finished and the application file 20 can be simply closed in the prior art.

Recently, the applications and application files connected via the network and service processing systems that are organized by plural computer systems via network are well spread in addition to the conventional stand-alone type computer system. However, the operation and processing for starting the application 10, opening the application file 20, use and finishing the application 10 and closing the application file 20 are the same those of the stand-alone computer system as shown above. The network system requests the security for inputting code information such as password and ID information when the user logging-in the network system and opening the application file 20 via the network. However, the conventional network system does not request the security for inputting any code information such as password and ID information when logging-off the network system and closing the application file 20 via the network. The user can simply close the conventional application file 20 via the conventional network system.

The personal data application file for the administration-related certificate of the user individual as in the electronic file can be considered in the same manner as described above.

The same as described above with Fig.17, the operation of the electronic personal data application file for the administration-related certificate of the user individual, in general, a password may be set for opening the electronic personal data application file, When the file is opened, the administration service application file can be accessed and browsed and edit the data. It is assumed that the password is requested to input to open the file, and the personal data application file is freely edited. However, when the editing operation for the personal data application is completed, it is assumed that the operation for closing is simply pressing a closing button.

Prior art 1: JP 2006-277193

### DISCLOSURE OF THE INVENTION

### THE PROBLEMS TO BE SOLVED

The administration-related certificate indicates user's administration status, property, qualification, etc. Therefore, its authenticity strictly should be secured, and it is preferable that the administration-related certificate cannot be falsified by any malicious person. The security of the certificates that become electronic personal data application file needs high security in each operation step.

As seen in the above description, no example has high security when the data editing is completed, and the application file is closed. No particular security is set in the prior art.

This problem is the same as the case for the electronic administration-related certificate. If the person who opens the application file has an authentication and passes the authentication check process and the input content and operation content to the application file are in his authentication range, there is no particular request for operating the application to be finished and closed without any special condition. Therefore, there is no conventional application requesting any special security measure to user for closing the application file.

However, there should be some cases to verify the updated data after editing the input content and operation content at the finishing and closing the electronic administration-related certificate application file.

Errors in the input content and operation content can occur by the user's misinput or misunderstanding. In some cases, the user intentionally inputs incorrect data and operates incorrect content. If the wrong data different from the correct data are edited in the electronic personal data application file and such wrong data is fixed and stored as a result of the data input and operation via the personal data application, it causes problems. Also, if the wrong edited electronic administration-related certificate application file is sent to other systems via the network, it causes problems.

In order to achieve the above-mentioned object, the present invention provides a personal data application and the service processing system for checking and verifying the input content and operation content are correct and without error at not only opening the personal data application file but also closing the personal data application file and suppressing the error input and wrong operation by user's misinput or user misunderstanding and suppressing the user's unintentional misinput and false claiming.

### MEANS FOR SOLVING THE PROBLEMS

In order to achieve the above-mentioned object, a personal data control system available in a computer system for operating a personal data application file which includes an open secret code for opening each personal data application file by the personal data application program and a close secret code for closing each personal data application file normally by the personal data application program, the personal data application program comprising: an application file open program module that performs authentication between an input code and the open secret code, and opens the personal data application file under the condition that the input code is matched with the open secret code; an application file edit program module that accepting and performs the data editing operation for the opened personal data application file from other computer resource via the network; and an application file close program module that performs authentication between an input code and the close secret code, and settling the data edition by the application file edit program module and closes the personal data application file under the condition that the input code is matched with the close secret code.

By this configuration, the present application file includes the open secret code and the close secret code, and the present application can check and verify the correctness of the edited data, input content and operation content by setting the security measure not only by the open secret code at the opening of the application file but also by the close secret code at the closing of the application file. The edited data by the editing person using the application file edit program module can be checked and verified by the holder of the personal individual.

Various information can be employed as the "open secret code" and the "the close secret code". For example, there are a PIN code composed of numerals, a password including alphanumerical information, an one-dimensional code such as a bar code, a two-dimensional code such as a QR code, and biological information of an user such as a fingerprint pattern, a vein pattern, an iris pattern, a voiceprint pattern, a face image, and the like. A code calculated by a constant algorithm such as combining a personal identification code inputted by a user with a terminal ID number of a user terminal 200a may be transmitted as a password code.

Next, in the configuration described above, when another person other than the holder of the personal data using the personal data application file editing function to edit the personal data application file, an input of an "editing start secret code" for permitting data editing to the personal data application file by the other person is requested. The "editing start secret code" can be set in the personal data application file to enhance security. Then, when the other person start to use the personal data application file editing function, the input of the "editing start secret code" is requested at the start of data editing.

Further, in the above configuration, in order to further enhance security, in addition to employing the "editing start password code" described above, an "editing end secret code" for closing editing of the personal data application file via the other computer resource can be set in the personal data application file. Then, the personal data application file editing function can request the input of the "edition start secret code" at the start of data editing to the other person, and requests the input of the "editing end secret code" at the end of the data editing. Various information can be set as the "editing start secret code" and the "editing end secret code". For example, there are a PIN code composed of numerals, a password including alphanumerical information, an one-dimensional code such as a bar code, a two-dimensional code such as a QR code, and biological information of an editor such as a fingerprint pattern, a vein pattern, an iris pattern, a voiceprint pattern, a face image, and the like. Also, the ID information may be stored in a card held by the editor.

Next, as a system configuration, the personal data application file described above may be stored in a server on a network and managed, and the personal data application is installed in a smart phone held by an individual who is the owner of the personal data and can be used as ASP (Application Service Provider) system. The other computer resource is configured to be accessible to a server on the network.

In addition, as another system configuration, the personal data application file described above is stored in a cloud system on the network and managed, and the personal data application is installed in a smart phone held by an individual who is an owner of the personal data and can be as ASP (Application Service Provider) system. The other computer resource is configured to be accessible to the cloud system.

Next, each individual data application file used in the personal data application can be combined into individual folders in individual units. When using the personal folder as described above, the "personal folder open secret code" for opening the personal folder in the personal data application and the "personal folder close secret code" for closing the individual folder opened by the personal data application can be set in each individual folder used in the personal data application.

The personal data application of the present invention can be applied to a variety of applications. For example, it can be applied to a cloud electronic identification system and a cloud electronic qualification system. The personal data application file is an administrative-related electronic file indicating the contents of administrative recording information or qualification information of the user individual, and the personal data application is an administrative service application of the user individual, and the other person is an administrative person who edits data of the administrative-related electronic file, and the other computer resources can be applied as an administrative-related electronic file management system used by the administrative person.

The present invention can be applied to a cloud electronic medical chart system. The personal data application file is an electronic medical record file of a patient individual, and the personal data application is an electronic medical record service application of a patient individual, and editing person is medical personnel and the other computer resources can be applied as a medical system to be used by a medical worker.

The present invention can be applied to a cloud electronic medicine handbook. The personal data application file is an electronic medicine handbook of a patient individual, and the personal data application is an electronic medical file service application of a patient individual, and the editing person is a pharmacist, and the other computer resources can be applied as a dispensing pharmacy system used by a pharmacist.

The present invention can be applied to a cloud electronic insurance card system. The personal data application file is an electronic insurance certificate file of the person to be insured, the personal data application is an electronic insurance certificate service application of the person to be insured, the editing person is a medical person, and the other computer resources can be applied as a medical facility system to be used by the medical person.

The present invention can be applied to a cloud electronic driver's license system. The personal data application file is an electronic driver's license file of the driver's individual, and the personal data application is an driver's license service application of the driver's individual, and the editing person is an administrative person who edits the data of the electronic driver's license, and the other computer resources can be applied as an electronic driver's license management system used by the administrative person.

Also, the present invention can be applied to an electronic passport system. The individual data application file is an individual electronic passport file, an individual data application is an individual immigration management service application, and the editing person is an administrative person who performs the immigration management for editing data of the electronic passport, and the other computer resources can be applied as an electronic passport management system used by the administrative person of the immigration management.

A method for controlling a personal data application available in a computer system for operating a personal data application file, comprises: setting an open secret code for opening each personal data application file by the application and a close secret code for closing each personal data application file normally by the personal data application; performing an application file open program module for performing authentication between an input code and the open secret code, and opening the personal data application file under the condition that the input code is matched with the open secret code; accepting and performing an application file edit program module for editing operation of data of the opened personal data application file from other computer resource via the network; performing an application file close program module for performing authentication between an input code and the close secret code, and settling the data edition by the application file edit program module and closing the personal data application file under the condition that the input code is matched with the close secret code.

### BRIEF DESCRIPTION OF THE DRAWINGS

Fig.1 is a schematic view of the configuration of the personal data application 110-1, 210-1 and the personal data application file 310-1 according to Embodiment 1.
Fig.2 is a schematic view showing the basic operation flow (1) of the application 100-1, 210-1 and the personal data application file 310-1 according to Embodiment 1.
Fig.3 is a schematic view showing the basic operation flow (2) of the application 100-1, 210-1 and the personal data application file 310-1 according to Embodiment 1.
Fig.4 is a schematic view of the configuration of the personal data application 110-2, 210-2 and the personal data application file 310-2 according to Embodiment 2.
Fig.5 is a schematic view showing the basic operation flow (1) of the application 100-2, 210-2 and the personal data application file 310-2 according to Embodiment 2.
Fig.6 is a schematic view showing the basic operation flow (2) of the application 100-2, 210-2 and the personal data application file 310-2 according to Embodiment 2.
Fig.7 is a schematic view showing the basic operation flow (3) of the application 100-2, 210-2 and the personal data application file 310-2 according to Embodiment 2.
Fig.8 is a schematic view of the configuration of the personal data application 110-3, 210-3 and the personal data application file 310-3 according to Embodiment 3.
Fig.9 is a schematic view showing the basic operation flow (1) of the application 100-3, 210-3 and the personal data application file 310-3 according to Embodiment 3.
Fig.10 is a schematic view showing the basic operation flow (2) of the application 100-3, 210-3 and the personal data application file 310-3 according to Embodiment 3.
Fig.11 is a schematic view showing the basic operation flow (3) of the application 100-3, 210-3 and the personal data application file 310-3 according to Embodiment 3.
Fig.12 is a schematic view showing the basic operation flow (3) of the application 100-3, 210-3 and the personal data application file 310-3 according to Embodiment 3.
Fig.13 is a schematic view showing an example of a personal folder 320-3 and an individual data application file 310-3 in a server 300
Fig.14 is a schematic view showing the configuration of the personal data applications 110, 210 and the personal data application file 310 according to Embodiment 4.
Fig.15 is a schematic view showing the operation example (1) according to Embodiment 4.
Fig.16 is a schematic view showing the operation example (2) according to Embodiment 4.
Fig.17 is a schematic view showing a brief description of an operation for starting a prior application to open a prior application file, and then ending and closing the prior application file in the prior art.

### DETAILED DESCRIPTION OF THE PREFERRED EMBODIMENT

Some embodiments of a personal data application and a personal data application control unit according to the present invention are described below with reference to the relevant drawing. Needless to add, the claims of the present invention include but are not limited to the application, configuration, or quantity shown in the following embodiments.

Hereinafter, the example of the personal data application and the basic operation of the personal data application of the present invention are described in Embodiment 1, 2, 3 and 4. As a specific personal data application, the cloud electronic medical chart is described as an example. The personal data application of the present invention is not limited to the cloud electronic medical chart.

Embodiment 1 is an example in which the open secret code and the close secret code are set in the personal data application file, and the personal data application has an application file open function, an application file editing function, and an application file closing function.

Embodiment 2 is an example in which the editing start secret code and the editing end secret code are set in the personal data application file in addition to the open secret code and the close secret code. The personal data application has an input function of an editing start secret code and an input function of an editing end secret code relating to the application file editing function, in addition to the application file open function and the application file close function.

Embodiment 3 is an example in which the personal data application file is stored and managed classified in each personal individual in each personal folder unit. Each personal data application file is set with a personal folder open secret code and a personal folder close secret code. The personal data application file is set with the open secret code, the close secret code, the editing start secret code, and the editing end secret code. The personal data application includes; a personal folder open function; an application file open function; an editing start secret code input function; an application file editing function; an application file close function; and a personal folder close function.

Embodiment 4 is an example of the business system of the present invention applying to a service support system for handling a cloud electronic insurance card, a cloud electronic medical record, and a cloud electronic driver's license on which the personal data application of the present invention is employed.

### Embodiment 1

The personal data application of the present invention of Embodiment 1 is described.

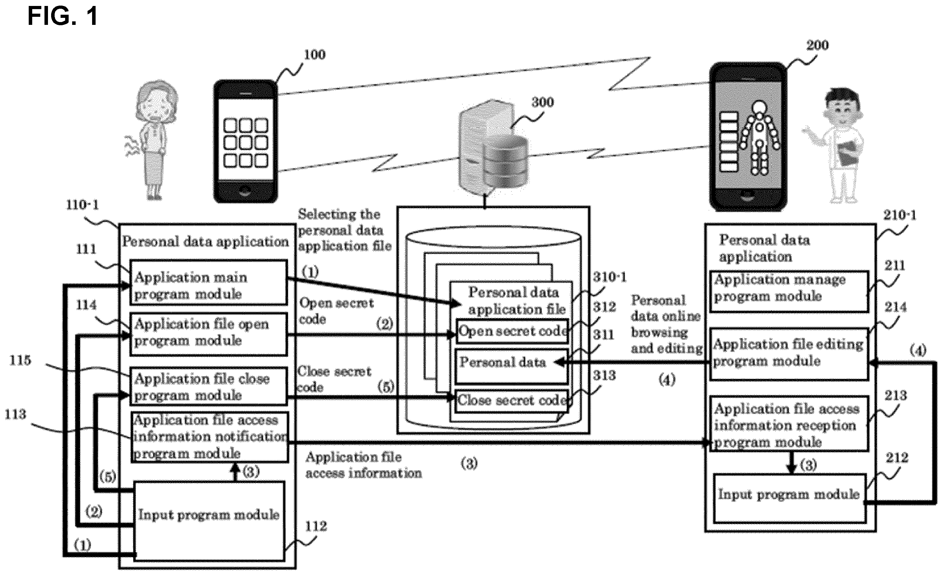

Fig.1 is a schematic view of the structure of the application 100-1, 210-1, the personal data application file 310-1 of Embodiment 1.

The server 300 is provided on a network. The personal data application file 310-1 is stored in a storage device and can be accessed from the personal data application 110-1 and the persona data application 210-1. The present invention may be provided in a cloud system. The personal data application file 310-1 is handled by the personal data application 110-1 and edited. A data set of the personal data application file 310-1 is a data set that can be edited.

The personal data application file 310-1 is described as an electronic medical record file as an example, and is a file in which information required for a general medical record handled in a medical institution such as medical examination records, treatment records, and receipt of an user is stored. For example, it is stored and managed on a cloud system.

The scale of the personal data application file 310 stored in the server 300 is not limited in the present invention. There can be a wide variety of scales by operation. For example, if the personal data application file 310 is used only by one clinic, the scale of the patient using the clinic is made to be large. For example, when the medical record of the insured person who subscribes to the national organization insurance is established as the electronic medical record file in the common specification, the scale corresponds to the total number of the insured persons who subscribe to the national organization insurance. When the huge electronic medical record file is handled in this way, it can be assumed that the server 300 is a large-scale system.

In Embodiment 1, a personal data application main file 311, an open secret code 312, and a close secret code 313 are set in the personal data application file 310-1.

The "open secret code" is a secret code for opening the personal data application file 310-1 by the personal data application 110-1.

The "close secret code" is a secret code for normally ending and closing the personal data application file 310-1 by the personal data application 110-1.

As the open secret code 312 and the close secret code 313 various information can be applied. For example, there may be a PIN code composed of numerals, a password of alphanumeric character information, an one-dimensional code such as a bar code, a two-dimensional code such as a QR code, and biological information of an user such as a fingerprint pattern, a vein pattern, an iris pattern, a voiceprint pattern, a face image, and the like. A code calculated by a constant algorithm such as combining a personal identification code inputted by a user with a terminal ID number of a user terminal 200a may be transmitted as a secret code

Next, the user terminal 100 held by the user may be a computer resource usable by a user such as a smart phone. In this example, the user terminal 100 is a smart phone. The user terminal 100 can download the personal data application 110-1 or can use the personal data application 110-1 by an ASP (Application Service Provider) system on the network.

In Fig.1, the personal data application 110-1 is shown as the downloaded and installed application on the smart phone, and it may be on the network available as an ASP (Application Service Provider) system.

The personal data application 110-1 of the present invention may be any kind of software and is not limited for a particular application use.

In Embodiment 1, the personal data application 110-1 is described as an example of an electronic medical chart application for browsing and operating an electronic medical record file.

In Embodiment 1, the personal data application 110-1 is an example including the application main program module 111, the input program module 112, the application file open program module 114, the application file close program module 115, and application file access information notification means 113.

The application main program modules 111 has various functions depending on the personal data application 100-1. If the persona data application 100-1 is a service processing application, a variety of functions for executing the required service processing are equipped as the application main program modules. General basic functions such as the data input function, the data output function and data storing function are included as the application main function. In Embodiment 1, various functions of an application required for handling an electronic medical record are provided.

The input program module 112 has an input function via data input device equipped with a system. In addition to a general input device such as a keyboard, a touch panel, etc. various input devices such as an IC card reader and a biological information reading device can be used as the input device. In response to the operation of the system, an appropriate equipment may be equipped.

The application file access information notification means 113 is a means for notifying the user of the address information of the server on the network in which the personal data application file 310-1 is stored with respect to the computer resource of the editing person. The editing person can access the personal data application file 310-1. In this case, the user notifies the computer system of the doctor about address information on the network in which the electronic medical record file 310-1 of the user is stored.

The application file open program module 114 is a program that that matches the input code via the input device with the open secret code and opens the personal data application file 310 when the authentication is established.

The application file close program module 115 is a program that that matches the input code via the input device with the close secret code and closes the open state application file as normally when the authentication is established. The application file close program module 115 has a function for normally ending and closing the personal data application file 310-1 in the opened state.

Next, the personal data application 210-1 is downloaded and installed in the computer resource 200 used by the editing person or can be used as the ASP (Application Service Provider) system on the network.

In Fig.1, the personal data application 210-1 is shown as the downloaded and installed application on the smart phone, but it may be on the network available as an ASP(Application Service Provider) system. In this example, an individual data application 210-1 of the computer resource 200 is an example including the application management program module 211, the input program module 212, the application file editing program module 214, and the application file access information reception program module 213.

The application management program modules 211 has various functions depending on the personal data application 200-1. If the personal data application 200-1 is a service processing application, a variety of functions for executing the required service processing are equipped as the application management program modules. General basic functions such as the data input function, the data output function and data storing function are included as the application main function. In Embodiment 1, various functions of an application required for handling an electronic medical record are provided.

The input program module 212 has an input function via the data input device equipped with a system. In addition to a general input device such as a keyboard, a touch panel, etc. various input devices such as an IC card reader and a biological information reading device can be used as the input device. In response to the operation of the system, an appropriate equipment may be equipped.

The application file access information reception means 213 is a means for receiving the user address information of the server on the network notified from the application file access information notification means 113. The user address information of the server is used to access the personal data application file 310-1. In this case, the computer system of the doctor can access the cloud system in which the electronic medical record file 310-1 of the user is stored on the basis of the address information of the server.

The application file editing program module 214 has a function for editing data input, data change, and the like to each individual data application file 310-1 in the open state. A specific function differs depending on the content of the personal data application file 310-1. In this case, an electronic medical chart browsing function, an input function, an editing function, and the like are provided.

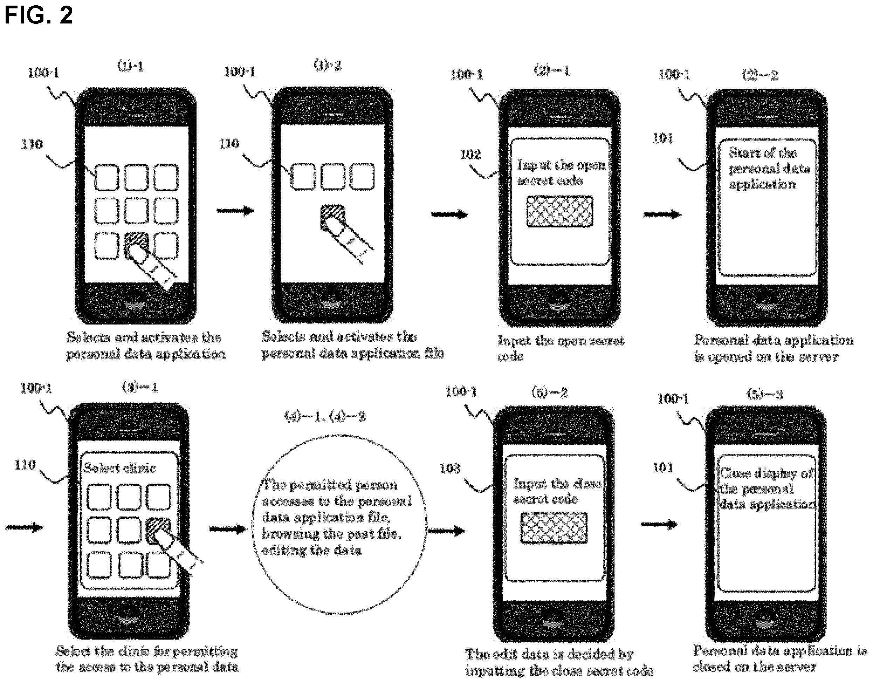

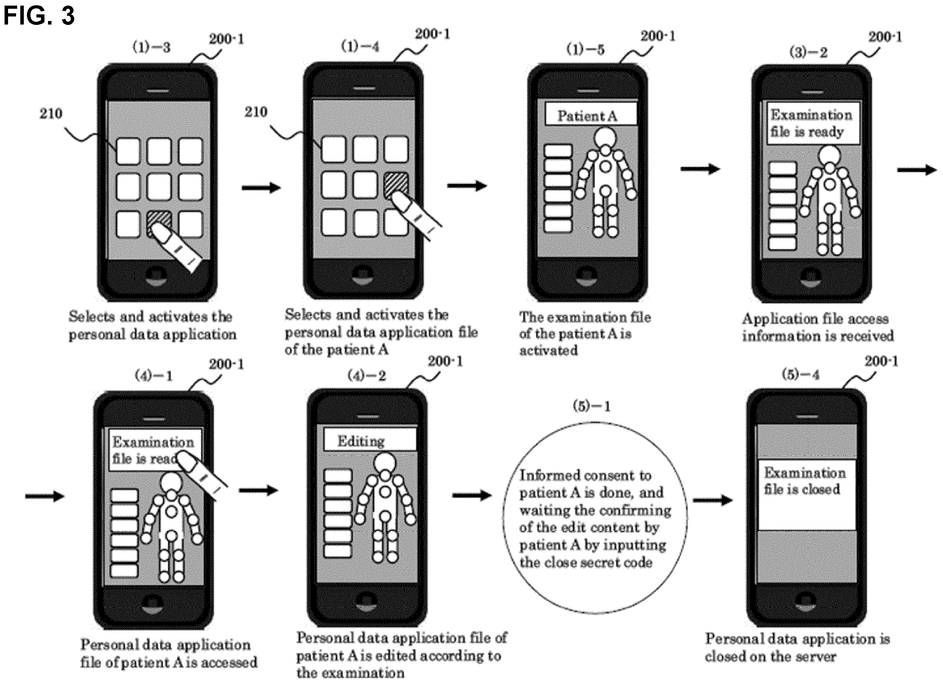

Fig.2 to Fig.3 are drawings for explaining the outline of operations of the personal data applications 110-1, 210-1, and the personal data application 310-1 according to this Embodiment 1. In particular, the security processing is set when the personal data application file 310-1 is opened and when the personal data application file 310-1 is closed is described. In this example, the personal data application 110-1 is an example mounted on a smartphone and can be input through a touch panel equipped in the smartphone.

In recent graphic user interface, various application files are displayed in an icon. The same as the general user interface system, when the icon is tapped, the application for handling the corresponding application file activated, and then the application file is opened to be editable by the application. In this case, the icons of individual data application files 310-1 which can be handled by the personal data application 110-1 stored in a smartphone are displayed and the icon-based operation is possible as an example.

The following describes the flow of operation and processing.

The numbers shown below are the numbers displayed in the Fig.1 to Fig.3.

### (1) -1, (1) -2, (1) -3, (1) -4, (1) -5

The user selects and activates the personal data application 110-1. In this case, the patient taps the icon of the electronic medical record service application displayed on the touch panel on the smart phone.

The user selects the personal data application file 310-1 among the displayed icons. The method of selecting and activating the personal data application file 310-1 is not limited, but as an example, by double tapping the icon of the electronic medical record file displayed on the touch panel by the patient, the personal data application file 310-1 is selectively activated.

On the other hand, the editing person selects and starts the personal data application 210-1 in the other computer resource.

In this example, the icon of the electronic medical record service application displayed on the display of the computer system is clicked by a doctor in charge.

Further, the doctor clicks the corresponding medical examination file of the patient who visits the consultation and opens the patient's consultation file.

### (2) -1, (2) -2

The user inputs the open secret code via the displayed input column.

The input column of "open secret code" for opening the personal data application file 310-1 is displayed by the application file open program module 114, and input of "open secret code" is requested to input.

In this example, the open secret code is input to the input column of the open secret code displayed on the touch panel by the patient.

The input method of "open secret code" is not limited, but in this example, input is performed by tapping an input key displayed on the touch panel display.

When the "open secret code" is inputted and the authentication is established by the application file open function of the application file open program module 114, the corresponding personal data application 110-1 activated and the individual data application file 310-1 is opened to be edited. An operation becomes possible.

### (3) -1, (3) -2

The application file access information notification means 113 notifies application file access information reception means 213 of the address information of the server on the network. The user selects the medical institution for permitting access to the electronic medical record file. In this example, the selection screen of the medical institution displayed on the user smart phone.

The application file access information reception means 213 receives the user address information of the server. In this example, when the application file access information reception means 213 receives the user address information, the application file access information reception means 213 displays that the electronic medical record file of the relevant patient is ready to select.

### (4) -1, (4) -2

The application file editing program module 214 uses the received address information of the server to access the target personal data application file 310-1. The personal data application file 310-1 is opened and editable, and data editing can be performed by using the application file editing program module 214 by the editing person. In this case, the computer system of the doctor can access the cloud system in which the electronic medical record file 310-1 of the user on the basis of the user address information and allows editing such as browsing of the past treatment history and writing of the present consultation content.

The doctor operates the electronic medical chart file 310-1 of a patient by the application file editing program module 214. Editing for the corresponding electronic medical chart file 310-1 of the patient is performed. The input is completed. For example, the input end button is pressed.

### (5) -1, (5) -2, (5) -3

Upon completion of input, the user performs the close operation to close the personal data application file 310-1. In this case, the user specifies the close operation to the application 110-1 by tapping the "close" operation button, which is one of operation buttons on the application 110-1.

The application file closing program module 115 displays the input column of the "close secret code" for closing the application file 310-1, and input of a closed password code is requested on the touch panel of the user's smart phone.

The method of inputting the "close secret code" is not limited, but in this example, input is performed by tapping the input button displayed on the touch panel.

When the close secret code is inputted and authentication by the closing function of the application file closing program module 115 is established, the application file 110-1 is normally ended and closed. The editing content of the application file 110 is confirmed and determined.

On the user's smart phone, on a computer resource of editing person, the end screen of the personal data application is displayed appropriately.

The application file open program module 114 and the application file close program module 115 are provided, so that the application file is in a state in which access and editing are not possible in normal time, and the application file can be edited on the basis of the intention of the user, and the edited content of the personal data application file 310-2 edited via the application file editing program module 214 of the editing person can be confirmed by the user himself/herself, so that security is improved.

The personal data application 110-1 is the electronic medical record application; and the personal data application file 310-1 is the electronic medical record file and the person who can be assumed is the patient himself (a parent in the case of a child) and the person who edits the electronic medical record file is the medical worker such as the doctor. As shown above, the close function of the personal data application file by the application file close program module 115 is provided, the user can receive the informed consent and confirm the contents (edited content) and then finish the edition of the electronic medical record file on the cloud system by the user himself/herself.

### Embodiment 2

The personal data application 110-2 according to Embodiment 2 of the present invention is described.

The same as the Embodiment 1, the server 300 is provided on a network, the personal data application file 310-2 is stored in a storage device and can be accessed from the personal data application 110-2 and the personal data application 210-2. The present invention may also be used in a cloud system.

In this Embodiment 2, the personal data application file 310-2 is described as an example of an electronic medical record file.

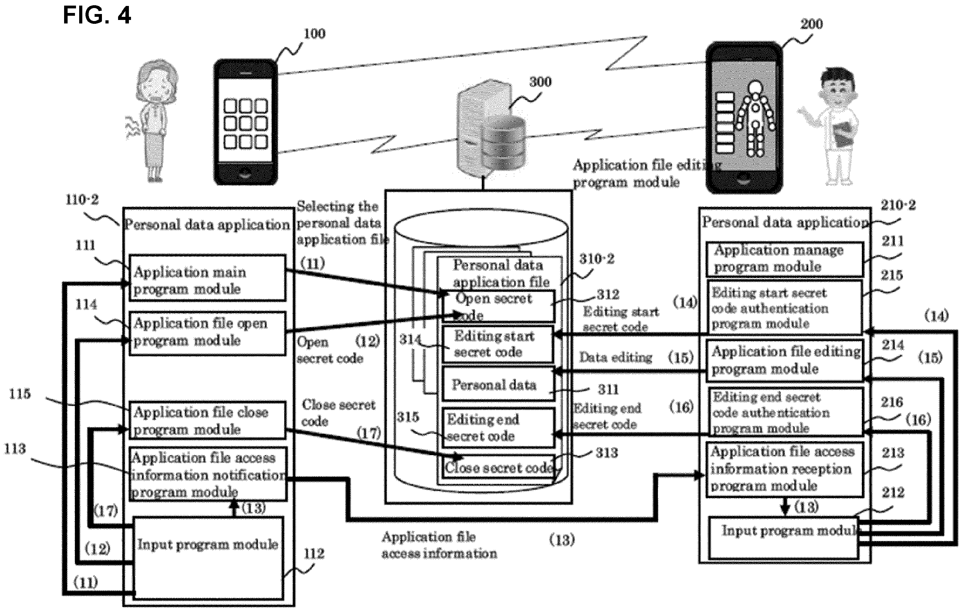

Fig.4 is a schematic view showing a configuration of the personal data application 110-2, 210-2 and the personal data application file 310-2 according to Embodiment 2.

The "open secret code" for opening the personal data application file 310-2 by the personal data application 110-2 and the "close secret code" for closing the personal data application file 310-2 opened by the personal data application 110-2 are set to each individual data application file 310-2 operated by the personal data application 110-2 the same as Embodiment 1. In addition, the "editing start secret code" for permitting data editing to the individual data application file 310-2 via the other computer resource and the "editing end secret code" for ending editing of the personal data application file 310-2 via the other computer resource.

As the open secret code 312, the close secret code 313, the editing start secret code 314, and the editing end secret code 315, various information can be employed. For example, there may be a PIN code composed of numerals, a password including character information, an one-dimensional code such as a bar code, a two-dimensional code such as a QR code, and biological information of an editor such as a fingerprint pattern, a vein pattern, an iris pattern, a voiceprint pattern, a face image, and the like. Also, the ID information may be stored in a card held by the editor.

The user terminal 100 such as a smart phone held by an user downloads the personal data application 110-2 or can uses the personal data application 110-2 as the ASP (Application Service Provider) system on the network. In Fig.4, the personal data application is drawn as the application downloaded and installed on the smart phone, but if it is available as the ASP (Application Service Provider) system, the personal data application exists on the network.

The configuration and processing operation of the user terminal 100 and the personal data application 110-2 such as the smart phone held by the user are the same as those of Embodiment 1, so the detailed description thereof is omitted.

Next, the computer resource 200 used by the editing person is described.

The personal data application 210-1 is downloaded or can be used as the ASP (Application Service Provider) system in the computer resource 200 used by the editing person. In Fig.4, the application is drawn as the application downloaded and installed in the smart phone, but if it is available as the ASP (Application Service Provider) system, the application exists on the network.

In the configuration example of Embodiment 2, the personal data application 210-2 has the application management program module 211, the input program module 212, the application file access information reception program module 213, the application file editing program module 214, the editing start secret code authentication program module 215, and an editing end secret code authentication program module 216.

In this case, the application management program module 211, the input program module 212, the application file access information reception program module 213, and the application file editing program module 214 are the same as those of Embodiment 1, and the description thereof is omitted here.

The editing start secret code authentication program module 215 is a function for acquiring and authenticating an input of "editing start secret code" for the start of data editing to the personal data application file 310-2 for the other person who performs data editing to the user's personal data application file 310-2.

The editing end secret code authentication program module 216 is a function of obtaining and authenticating an input of "editing end secret code" in the normal end of data editing.

That is, in order to start and complete data editing to the personal data application file 310-2, the input of the "open secret code" by the user himself/herself and the input of the "editing start secret code" by the editing person to edit are requested before the data editing, and the input of the "close secret code" by the user himself/herself and the input of the "editing end secret code" by the editing person to edit are requested at the time of normal closing operation after the data editing.

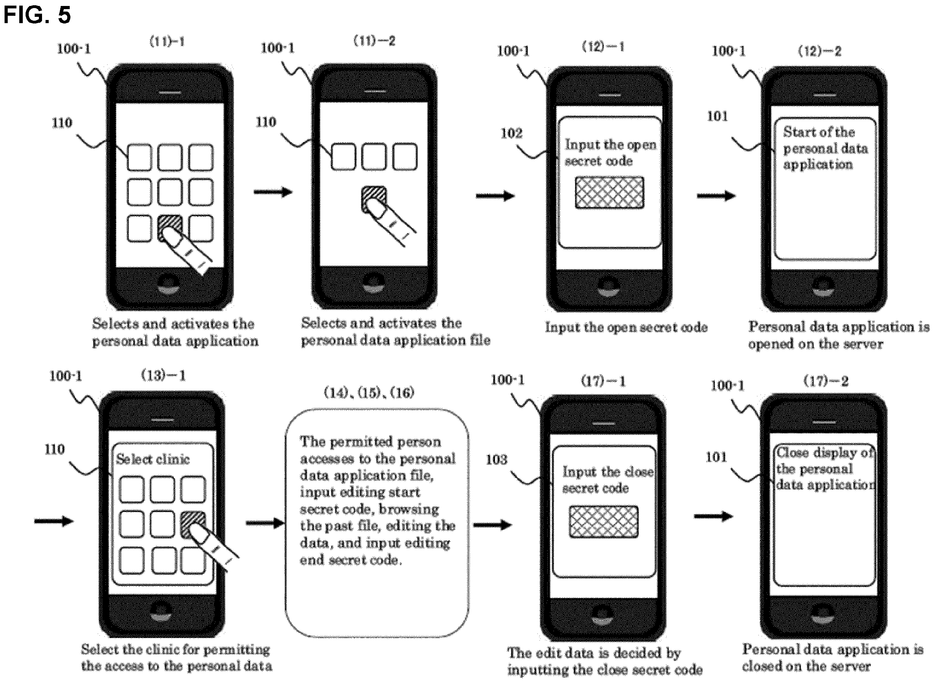

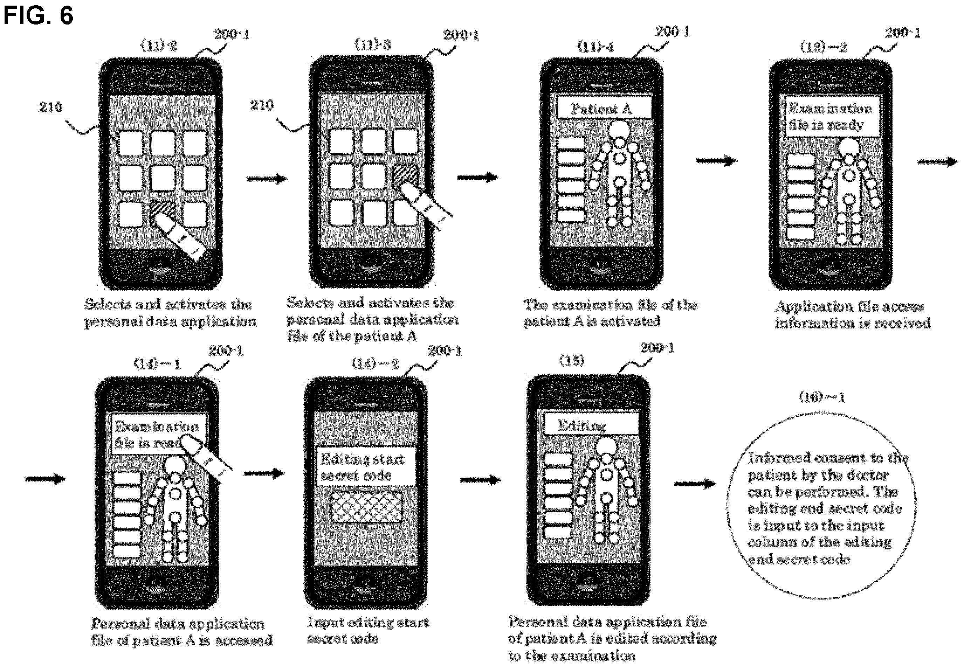

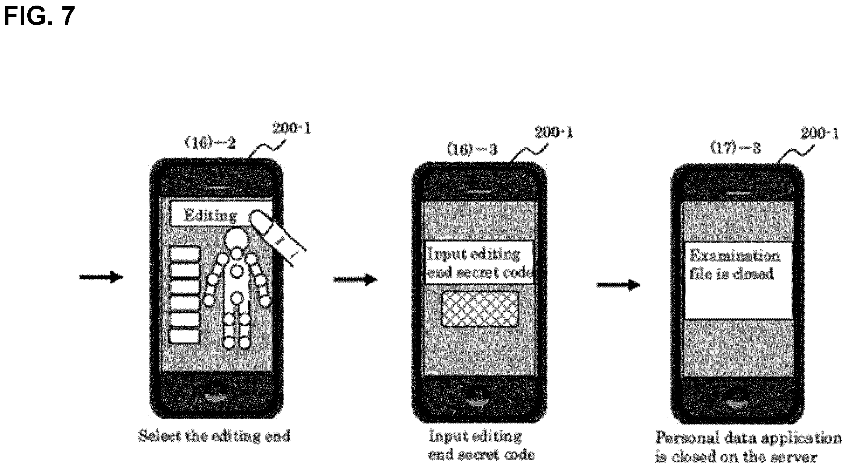

Fig.5 to Fig.7 are the drawings for explaining the outline of operations of the personal data applications 110-2, 110-2 and the personal data application 310-2 according to this Embodiment 2. In particular, the security processing set at the time of opening the personal data application file 310-2 and when closing the personal data application file 310-2 and when the editing person starts editing and closes editing is described.

In this example, the personal data application 110-2 is an example mounted on the smartphone and can be input through a touch panel of the smartphone.

The following describes the flow of operation and processing.

The numbers shown below are the numbers displayed in Fig.4 to Fig.7.

### (11) -1, (11) -2, (11) -3, (11) -4, (11) -5

The selection of the personal data application 110-2 by the user, the selection of the personal data application file 310-2 by the user, and the selection of the personal data application 210-2 in the computer system by the editing person are the same as those described in Embodiment 1, so the detailed description thereof is omitted here.

### (12) -1, (12) -2

The opening processing of the personal data application 110-2 and opening processing of the personal data application file 310-2 starts when establishing the authentication by the personal data application file open program module 114 matching the input of the open secret code by the user and the input open secret code the same as that of Embodiment 1 and the detailed description thereof is omitted here.

### (13) -1, (13) -2

The notification of user address information of the server on the network to the application file access information reception program module 213, the reception of the user address information of the server by the application file access information reception program module 213, and the displaying indicating that the preparation of the electronic medical record file of the relevant patient is the same as that of Embodiment 1, and the detailed description thereof is omitted here.

### (14) -1, (14) -2

The application file editing program module 214 uses the received user address information of the server to access the personal data application file 310-2. The button for editing start of the corresponding personal data application file is pressed. In this case, for example, a button "the electronic medical record is prepared" is pressed.

In this Embodiment 2, after opening the personal data application file 310-2, at the time of editing starting, the authentication processing of the editing start secret code is required.

The editing start secret code is input to the input column of the editing start secret code displayed on the display of the computer resource 200.

The input method of the editing start secret code is not limited. In this example, input is performed by tapping the input button displayed on the touch panel with respect to the input column.

When the editing start secret code is inputted and the authentication by the editing start secret code authentication program module 215 is established, data editing to the application file 110-2 can be performed by using the personal data application file editing program module 214 by the editing person.

In this case, the computer system of the doctor can access the cloud system in which the electronic medical record file 310-2 of the user is stored on the basis of the address information of the server 300, and allows editing such as browsing of the past treatment history and writing of the present consultation content.

### (15) Editing of the personal data application file

The person performs editing of the individual data application file.

The doctor operates the electronic medical chart file 310-2 of the patient by the application file editing program module 214. Editing is performed to edit the electronic medical chart file 310-2 of the patient. The input is completed. For example, the input end button is pressed.

### (16) -1, (16) -2, (16) -3

In this Embodiment 2, the authentication processing of the editing end secret code is also required when editing of the individual data application file 310-2 by the other person is ended. Therefore, the editing confirmation is performed when both starting and ending by the same person.

In this example, the informed consent to the patient by the doctor can be performed. Thereafter, the editing end button is pressed to display on the display of the computer resource 200. The editing end secret code is input to the input column of the editing end secret code.

The input method of the editing end secret code is not limited. In this example, input is performed by tapping the input button displayed on the touch panel with respect to the input column.

When the editing end secret code is inputted and the authentication by the editing end secret code authentication program module 216 is established, the data editing to the application file 110-2 is ended by using the application file editing program module 214 by the editing person.

### (17) -1, (17) -2, (17) -3

Upon completion of input, the user performs the operation to close the personal data application file 310-2.

The normal end processing of the personal data application file 310-2 by the user, the authentication processing of the close secret code by the application file closing function 115, and the normal end processing of the application file 110-2 are the same as those of Embodiment 1, and the description thereof is omitted here.

Thus, by providing the editing start secret code authentication function 215 and the editing end secret code authentication program module 216, it is possible to authenticate that the edited person has the valid editing authority, and to enhance security such as prevention of spoofing.

Since the application file is equipped with the application file open program module 114 and the application file closing program module 115, the application file is in the state in which accessing and editing are not possible in the normal time. The personal data application file can be edited based on the intention of the user, and the edited content of the personal data application file 310-2 edited by the application file editing program module 214 can be confirmed by the user himself/herself. The security is improved.

### Embodiment 3

The personal data applications 110-3, 210-3, the personal data application file 310-3, and the personal folder 320-3 according to Embodiment 3 are described below.

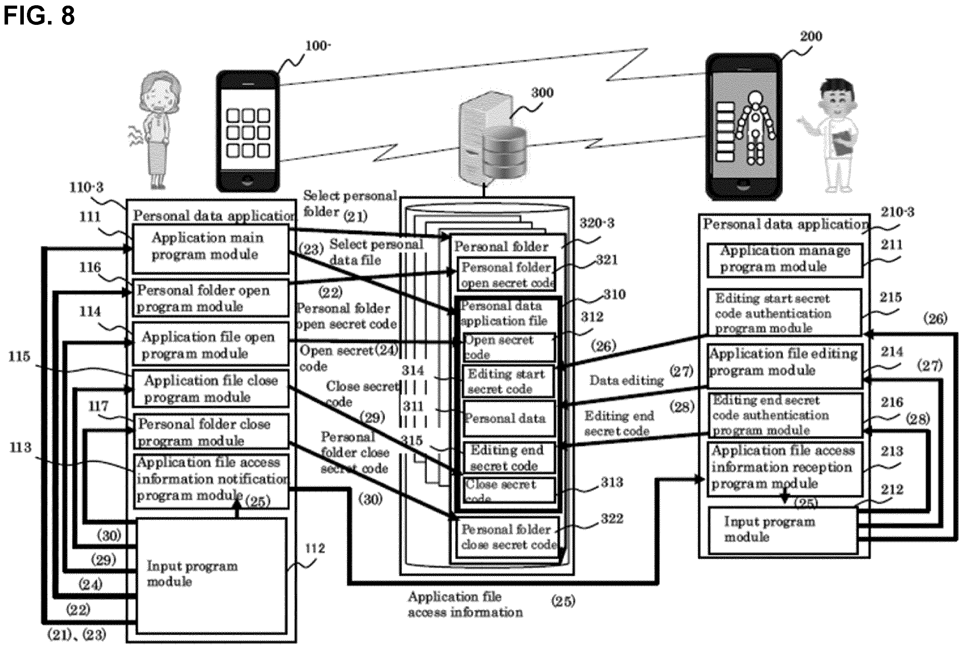

Fig.8 is a schematic drawing showing the configuration of the personal data applications 110-3, 210-3, the personal data application file 310-3, and the personal folder 320-3 according to Embodiment 3.

In this example, the personal data application file 310-3 is classified into each persona folders 320-3 in individual units, and one or a plurality of individual folders 320-3 are provided, and each personal data application file 310-3 is stored in each personal folder 320-3.

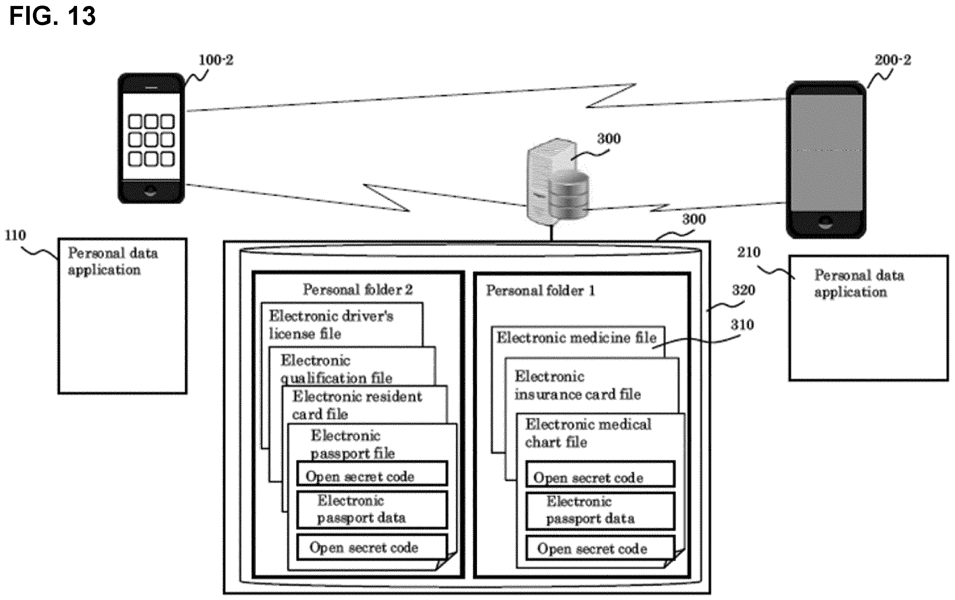

Fig.13 is a schematic drawing showing an example of the personal folder 320-3 and the personal data application file 310-3 in the server 300. The configurations of the personal data applications 110-3 and 210-3 are not shown in Fig.13.

In the example shown in Fig.13, the personal folder 1 and the personal folder 2 are present as the personal folder 320-3. There are the electronic medical chart file, the electronic insurance card file, and the electronic medicine file stored in the personal folder 1 as the personal data application file 310-3. There are the electronic resident card file, the electronic qualification file, the electronic driver's license file and the electronic passport file and the like stored in the personal folder 2 as the personal data application file 310-3.

In this example, as shown in Fig.8, the personal folder open secret code 321 and the personal folder close secret code 322 are set in each personal folder 320-3.

The open secret code 312, the close secret code 313, the editing start secret code 314, and the editing end secret code 315 are set in each personal data application file 310-3.

In this case, the personal data application 110-3 includes the personal folder open program module 116, the application file open program module 114, the application file close program module 115 and the personal folder close program module 117.

The personal folder open program module 116 is a program module for confirming authentication of the "personal folder open secret code" by receiving the input of the "personal folder open secret code", and opening the individual folder 320-3 when the authentication is established.

The personal folder close program module 117 receives the input of the "personal folder close secret code" to confirm the authentication of the "personal folder close secret code". If the authentication is established, the personal folder close program module 117 normally ends and close the activated personal folder 320-3.

Other components are the same as those of Embodiment 1 and 2, and the detailed description thereof is omitted here.

In this case, the personal data application 210-3 includes the editing start secret code authentication program module 215, the application file editing program module 214, and the editing end secret code authentication program module 216.

These components are the same as those of Embodiment 2, and the detailed description thereof is omitted here.

The following describes the flow of operation and processing.

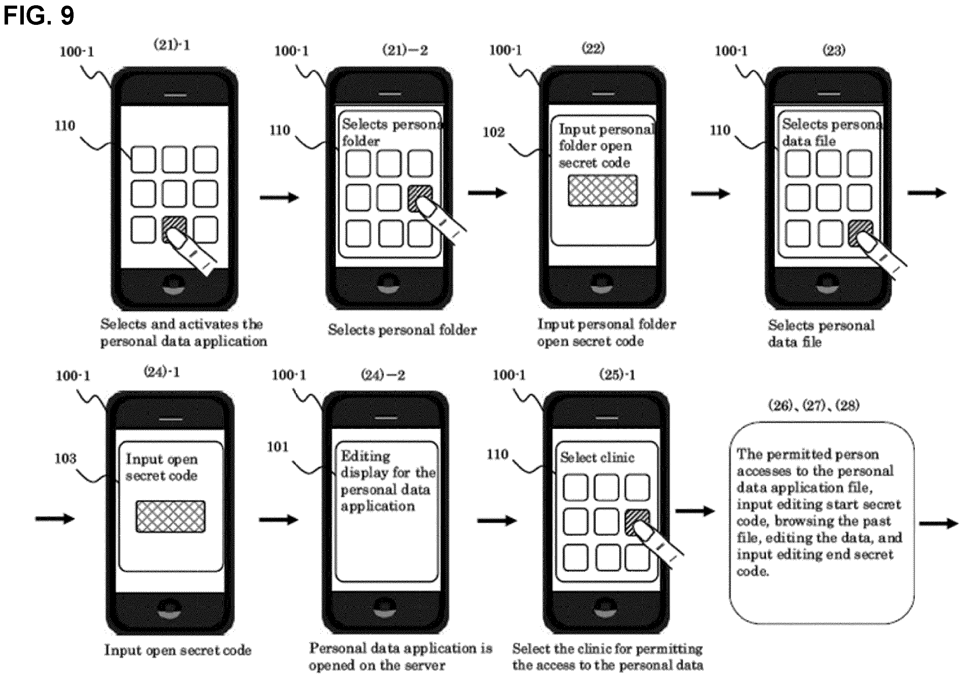

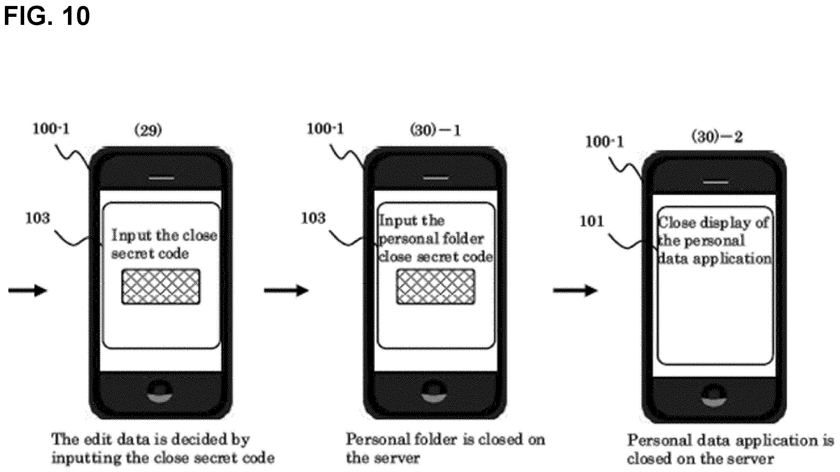

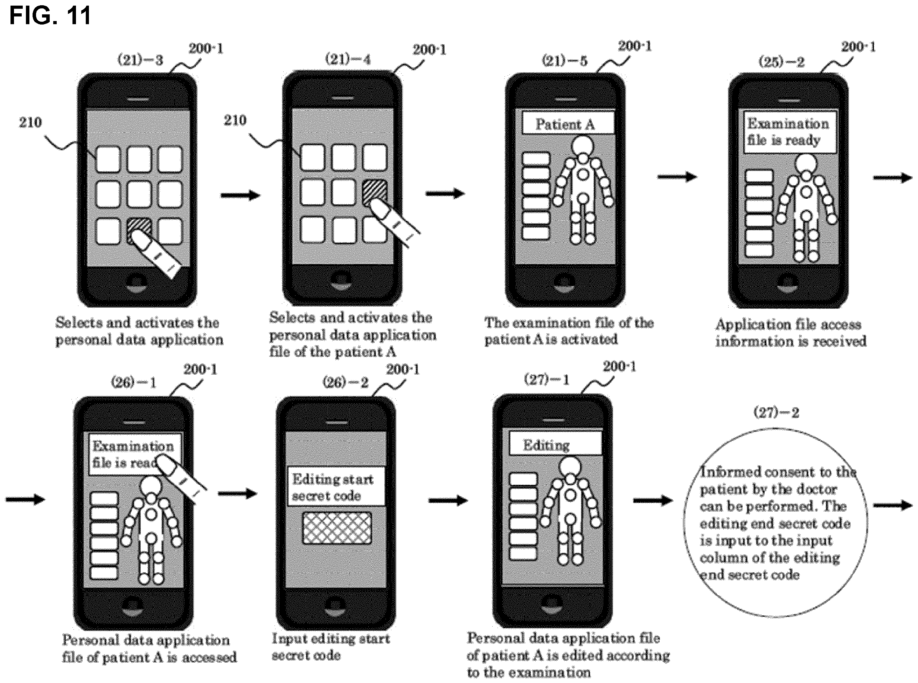

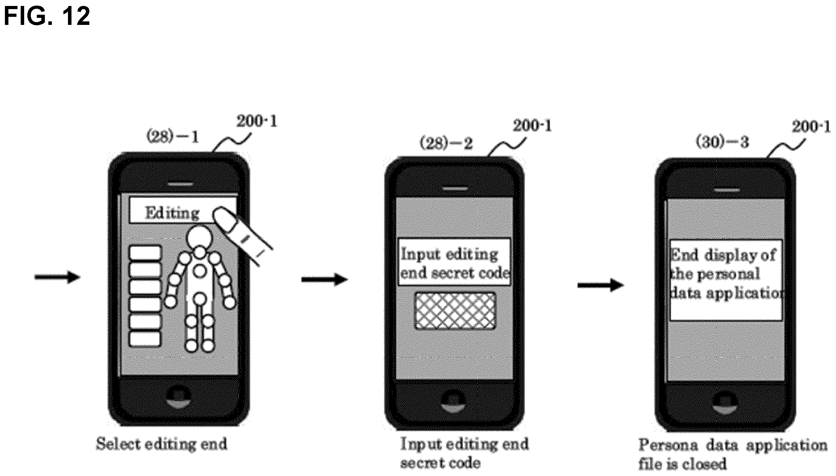

The numbers shown below are the numbers displayed in the Fig.8 to Fig.13.

### (21) -1, (21) -2, (21) -3, (21) -4, (21) -5

The user selects and activates the personal data application 110-1.

In this example, the patient taps the icon of the electronic medical record service application displayed on the touch panel in the smart phone.

Next, the user selects and starts the target personal folder 320-3 from the displayed icon.

The method of selecting and activating the personal folder 320-3 is not limited. For example, the personal folder 320-3 is selectively activated by double tapping the corresponding icon of the personal folder 320-3 in which the electronic medical record file to be used is stored from the personal folder 320-3 displayed on the touch panel in the smart phone by the patient.

On the other hand, the other person selects and starts the personal data application 210-1 in the computer system.

In this example, the icon of the electronic medical record service application displayed on the display of the computer system is clicked by the doctor.

Further, the doctor clicks the medical examination file of the patient who visits the consultation and opens a patient's consultation file.

### (22)

In the configuration example of this Embodiment 3, the input column of "personal folder open secret code" for opening a personal folder 320-3 is displayed by the personal folder open program module 116. The input of "personal folder open secret code" is requested.

In this example, the patient inputs the personal folder open secret code to the input column of the personal folder open secret code displayed on the touch panel in the smart phone.

The input method of "personal folder open secret code" is not limited. In this example, input is performed by tapping the input key button displayed on the touch panel with respect to the input column.

When the "personal folder open secret code" is inputted and the authentication is established by the individual folder open program module 116, the personal folder 320-3 is activated, and the personal data application file 310-3 stored in the personal folder 320-1 is displayed.

### (23)

The selection start of the personal data application 110-3 by the user is the same as that of Embodiment 1 and 2, and the detailed description thereof is omitted here.

In this example, the patient taps the corresponding icon of the electronic medical record service application displayed on the touch panel in the smart phone.

The doctor clicks the medical examination file of the patient who visits the consultation and opens the patient's consultation file.

### (24) -1, (24) -2

The processing of starting up the personal data application 110-2 and opening of the personal data application file 310-2 by the establishment of the authentication by the application file open program module 114 using the input of the open secret code by the user and the input open secret code is the same as that of the Embodiment 1 and 2, and the detailed description thereof is omitted here.

### (25) -1, (25) -2

The notification of the user address information of the server on the network to the application file access information reception program module 213, the reception of user address information of the server by the application file access information reception program module 213, and the displaying indicating that the preparation of the electronic medical record file of the relevant patient can be prepared are the same as those in Embodiments 1 and 2, and the detailed description thereof is omitted here.

### (26) -1, (26) -2

The access to the personal data application file 310-2 by the application file editing program module 214, the input of an editing start secret code to the input column of the editing start secret code, and the authentication processing of the editing start secret code are the same as those in Embodiments 1 and 2, and the detailed description thereof is omitted here.

### (27)

Data can be edited into the application file 110-2 using the application file editing program module 214 by the other person.

In this case, the computer system of the doctor can access the cloud system in which the electronic medical record file 310-2 of the user is stored on the basis of the user address information of the server 300, and allows editing such as browsing of the past treatment history and writing of the present consultation content.

The doctor operates the electronic medical chart file 310-2 of the patient by the application file editing program module 214. Editing is performed to edit the electronic medical chart file 310-2 of the patient. The input is completed.

### (28) -1, (28) -2

Informed consent to patient by the doctor.

In this Embodiment 3, the authentication processing of the editing end secret code is also required when editing of the persona data application file 310-2 by the other person is ended. Editing being started and ended by the same person is confirmed.

In this example, the input of the editing end secret code to the input column of the informed consent to the patient by the doctor, the input of the editing end secret code to the input column of the editing end secret code, and the authentication processing by the editing end secret code authentication program module 216 are the same as those of Embodiment 2, and the detailed description thereof is omitted here.

### (29)

Upon completion of the input, the user performs the operation to close the personal data application file 310-3.

The normal end processing of the personal data application file 310-3 by the user, the authentication processing of the close secret code by the application file close program module 115, and the normal end processing of the application file 110-3 are the same as those of Embodiment 1, and the description thereof is omitted here.

### (30)

In the configuration example of this Embodiment 3, the input column of "personal folder close secret code" for closing the personal folder 320-3 is displayed by the personal folder close program module 117, and the input of "personal folder close secret code" is requested.

In this example, the patient inputs the personal folder close secret code to the input column of the personal folder close secret code displayed on the touch panel in the smart phone.

The input method of "personal folder close secret code" is not limited. In this example, the input is performed by tapping an input key button displayed on the touch panel screen with respect to the input column.

When the "personal folder close secret code" is inputted and the authentication is established by the individual folder close program module 117, the individual folder 320-3 is normally completed and closed.

Thus, by providing the individual folder open program module 116 and the individual folder close program module 117, the personal folder is in the state where the personal folder cannot be accessed normally, and the personal folder can be opened or closed based on the user's intention. Further, since the user himself / herself can confirm the edited content of the personal data application file 310-3 edited by the application file editing program 214 of the other person, the security is improved.

### Embodiment 4

The personal data application 110-4, 210 and the personal data application file 310 according Embodiment 4 are described below.

Embodiment 4 is an example in which the user terminal 100-4 used by the patient is the reception terminal installed in the reception of the medical clinic such as the hospital. That is, the user terminal is not owned by the user such as the case with the smart phone, and the patient who visits the hospital uses the reception terminal in the hospital. Embodiment 4 is an example in which a plurality of patients share a common terminal in the hospital.

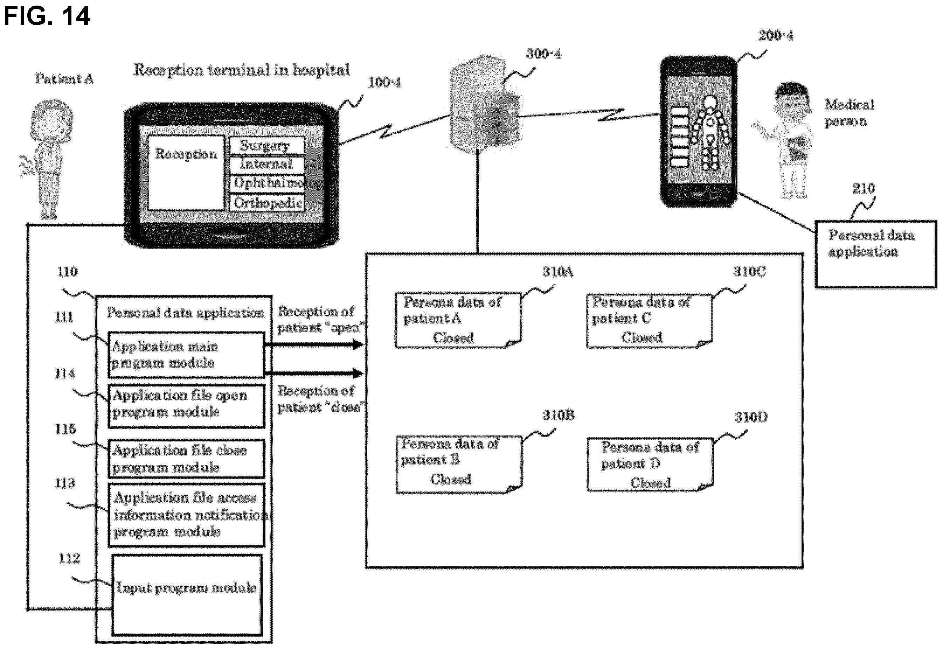

Fig. 14 is the schematic drawing showing the configuration of the personal data applications 110, 210 and the personal data application file 310 according to Embodiment 4.

Embodiment 4 is configured to be installed in the general reception terminal 100-4 of the hospital or can be used as ASP (Application Service Provider) system on the network. The patient who visits the hospital receives the visit guidance via the general reception terminal 100-4, and a plurality of patients use the personal data application 110 that can be used by the general reception terminal 100-4.

As shown in Fig.14, the personal data application 110 is provided with the application main program module 111, the input program module 112, the application file access information notification program module 113, the application file open program module 114 and the application file close program module 115, as shown in Embodiment.

The application main program module 111 is equipped with various functions for executing processing necessary for electronic medical record file management. In this Embodiment 4, the patient's ID identification function is provided, and the function such as the data input function, the data output function, and the data storage function are provided by identifying the electronic medical record file of the patient among the electronic medical record files 310 stored in the server 300 according to the ID information presented by the current patient.

The patient's ID identification function is not limited and may be diverse.

For example, when the patient registers biological information, the biological information of the patient can be handled as the ID identification information by inputting the biological information to the visit patient.

For example, if the patient has the hospital visit card, it is possible to input the ID identification information written in the visit card via the reader or the like.

The input program module 112 is provided as the touch panel of the general reception terminal of the hospital in this Embodiment 4. The input device such as a keyboard and a mouse is not excluded. There may be the person who has difficulty operating the keyboard or the mouse, but the touch panel and the button depressing type may be acceptable and preferable for general patients.

The application file access information notification program module 113, the application file open program module 114, and the application file close program module 115 may be the same as those described in Embodiment 1.

The personal data application 210 which can be installed in or available on the computer resource 200 used by the medical worker or the like is provided with the application management program module 211, the input program module 212, the application file access information reception program module 213, and the application file editing program module 214. These are the same as those of Embodiment 1.

Next, the personal data application file 310 stored in the server 300 is described.

In Embodiment 1 to Embodiment 3, a plurality of persons' personal data application files 310 can be stored in the server 300.

The scale of the personal data application file 310 stored in the server 300 is not limited in the present invention. There can be a wide variety of scales by operation. In this case, it is described by taking the electronic medical chart file as an example. For example, if the personal data application file 310 is used only by one clinic, the scale of the patient using the clinic is used. For example, when a medical record of the insured person who subscribes to the national organization insurance is established as the electronic medical record file in a common specification, the scale corresponding to the total number of insured persons who subscribe to the national organization insurance is set. The huge electronic medical record files are handled in this case, and it can be assumed that the server 300 is a large-scale system.

In the description, only four electronic medical record files 310 of the electronic medical record file 310-A of the patient A, the electronic medical record file 310-B of the patient B, the electronic medical record file 310-C of the patient C, and the electronic medical record file 310-D of the patient D are shown in the server 300. Although only four electronic medical record files 310 are shown in the figure, the number of the electronic medical record files 310 can be large scale number.

The electronic medical chart file 310 shown in Fig.14 is provided with the personal data application main file 311, the open secret code 312, and the close secret code 313 as in the personal data application file 310-1 of Embodiment 1. If the electronic medical record file 310-2 of the type of Embodiment 2 is used, the editing start secret code 314 and the editing end secret code 315 are provided in addition to them. If the electronic medical record file 310-2 is of the type of Embodiment 3, the personal folder open secret code 321, and the personal folder close secret code 322 are provided in addition to them.

The example of operation in this case in which the user terminal 100 according to Embodiment 4 is the reception terminal 100-4 in the hospital is described below.

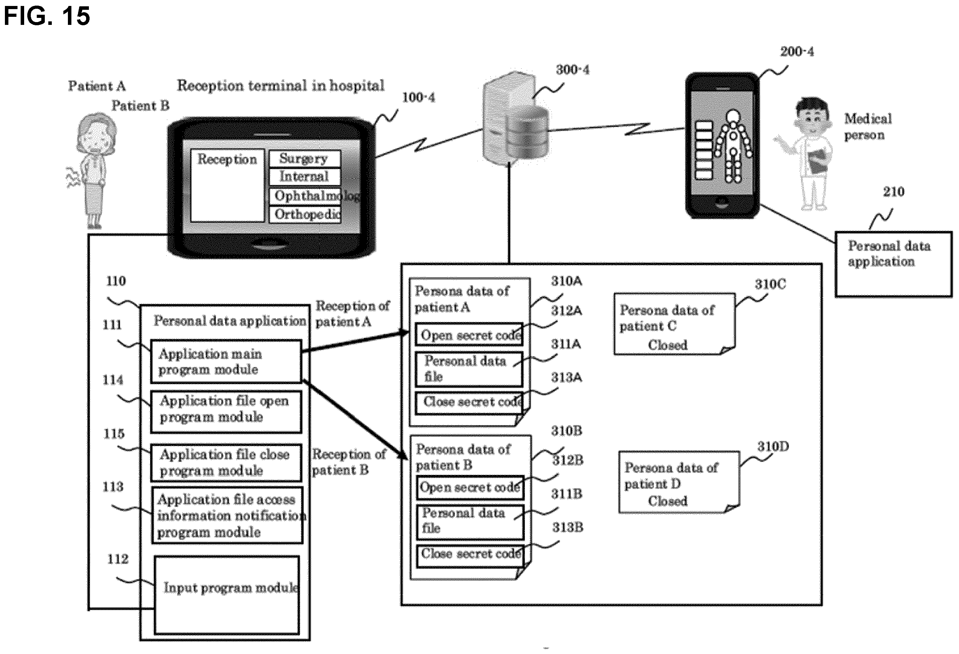

For example, as shown in Fig.15, the visiting patient receives guidance via the reception terminal 100-4 and receives his/her own ID identification information. In this example, the button is displayed for each department, and the user touches the button to be examined and continues reception. The reception terminal 100-4 accesses the server 300 and accesses the electronic medical record file 310-A of the patient A specified by the ID identification informationas shown in Embodiment 1. The patient inputs the open secret code via the application file open program module 114 to open his/her own electronic medical record file 310-A. In this case, the biological information designated via the input program module 112 of the reception terminal 100-4 is input by the patient A.

The reception terminal 100-4 notifies the application file access information to the computer resource 200 used by the doctor in charge of the patient A through the application file access information notification program module 113.

In this case, the patient B continues to visit and receives the patient guidance as the same case of the patient A. The electronic medical chart file 310-B is opened through the input of ID identification information of the patient B and the input of the open secret code. The application file access information is notified to the computer resource 200 used by the doctor in charge of patient B.

That is, as shown in FIG. 15, at the same time, a plurality of electronic medical record files 310 are independently opened independently, and individually edited independently by the corresponding doctors.

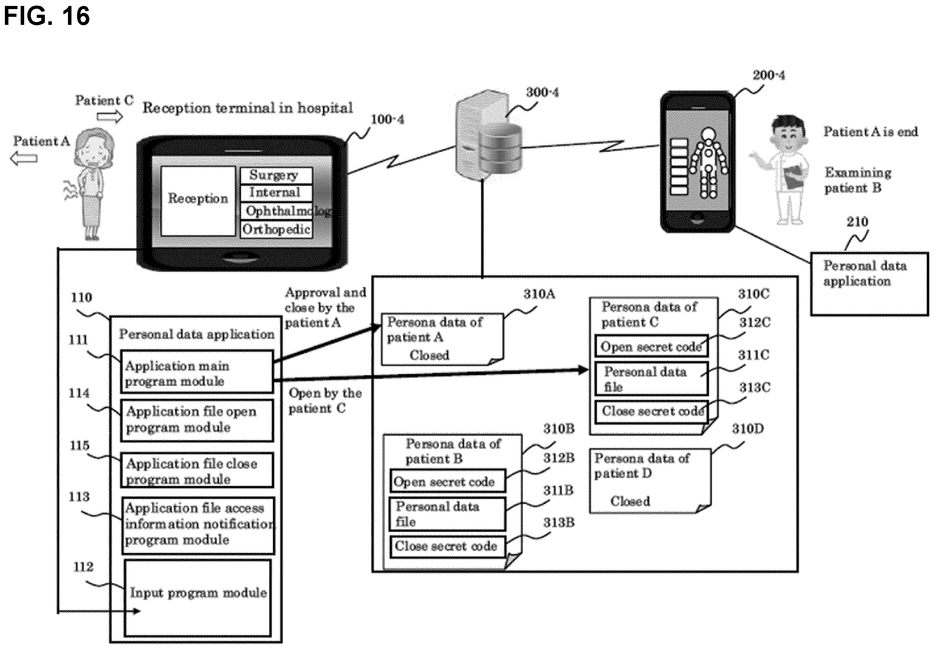

Next, for example, as shown in Fig.16, the reception terminal 100-4 obtains the input of the close secret code via the application file close program module 215 to obtain an approval of editing of the electronic medical record file 310-A to the patient A who visits the reception terminal 100-4 for processing of the hospital, and closes the electronic medical record file 310-A together with the consultation fee payment guidance when there is the input of the close secret code. Here, the patient A inputs the biological information designated via the input means 112 of the reception terminal 100-4.

If the patient B has not yet completed the consultation, and the electronic medical record file 310-B of the patient B remains open at this moment.

Further, as shown in the example of Fig.16, the patient C newly visits the hospital and receives the patient guidance as the same case of the patient A and B via the reception terminal 100-4. The electronic medical chart file 310-C of the patient C specified by the ID identification information and the patient C inputs the open secret code via the application file open program module 114 to open the electronic medical record file 310-C of the patient C.

Thus, the personal data application 100 as shown in Embodiments 1, 2 and 3 can be operated through the shared reception terminal 100-4 to use the personal data application file 310 via the shared reception terminal 100-4 even when a plurality of patients visits and exits at an arbitrary timing. Each doctor can utilize the personal data application file 310 of the patient in charge of each patient.

### INDUSTRIAL APPLICABILITY

This invention is applicable to the personal data application operated on the computer system and can be applied to various kind of information such as an administrative-related file, an electronic medical record file, an electronic insurance card file, an electronic medicine notebook file, an electronic driver's license file, an electronic certificate file, an electronic resident card file, an electronic seal registration card, an electronic passport file, and the like. The use of the personal data application and the service processing system is not limited.

While some preferable embodiments of the sample storage according to the present invention are described above, it should be understood that various changes are possible, without deviating from the technical scope according to the present invention. Therefore, the technical scope according to the present invention is limited only by the claims attached.

### DESCRIPTION OF THE REFERENCE NUMERALS

100 User terminal
110 Personal data application
111 Application main program module
112 Input program module
113 Application file access information notification program module
114 Application file open program module
115 Application file close program module
116 Personal folder Open program module
117 Personal folder close program module
200 Computer resources
210 Personal data application
211 Application management program module
212 Input program module
213 Application file access information reception program module
214 Application file editing program module
215 Editing start secret code authentication program module
216 Edition end secret code authentication program module
310 Personal data application file
311 Personal data application main file
312 Open secret code
313 Close secret code
314 Editing start secret code
315 editing end secret code
320 Personal folders
321 Personal folder open secret code
322 Personal folder close secret code

## Claims

1. A personal data control system available in a computer system for operating a personal data application file which includes an open secret code for opening each personal data application file by the personal data application program and a close secret code for closing each personal data application file normally by the personal data application program,
the personal data application program comprising:
an application file open program module that performs authentication between an input code and the open secret code, and opens the personal data application file under the condition that the input code is matched with the open secret code;
an application file edit program module that accepting and performs the data editing operation for the opened personal data application file from other computer resource via the network; and
an application file close program module that performs authentication between an input code and the close secret code, and settling the data edition by the application file edit program module and closes the personal data application file under the condition that the input code is matched with the close secret code.

2. A personal data application according to claim 1,
wherein the personal data application file includes an editing start secret code for permitting the data editing operation from the other computer resource via the network;
the application file edit program module requests an input of the editing start secret code when the data editing operation for the personal data application file is requested to start.

3. A personal data application according to claim 1,
wherein the personal data application file includes an editing start secret code for permitting the data editing operation for the personal data application file from the other computer resource via the network, and an editing end secret code for settling and finishing the data editing operation for the personal data application file by the other computer resource via the network;
the application file edit program module requests an input of the editing start secret code when the data editing operation for the personal data application file is requested to start, and requests an input of the editing end secret code when the data editing operation for the personal data application file is requested to finish.

4. A personal data application according to claim 1, wherein the open secret code and the close secret code are registered biometric information of the holder of the personal data.

5. A personal data application according to claim 2, wherein the open secret code and the close secret code are registered biometric information of the holder of the personal data, and the editing start secret code is the registered biometric information of the person using the other computer resource via the network.

6. A personal data application according to claim 3, wherein the open secret code and the close secret code are registered biometric information of the holder of the personal data, and the editing start secret code and the editing end secret code are the registered biometric information of the person using the other computer resource via the network.

7. A personal data application according to any one of claims 1 to 6,
wherein the personal data application file is stored in a server on a network;
wherein the application file open program module and the application file close program module are configured to be installed in a smart phone held by the person who is the holder of the personal data or can be available as the application service provider system managed in the server;
wherein the application file editing program module is configured to be installed in the other computer resource held by the person using the other computer resource via the network or can be available as the application service provider system managed in the server.

8. A personal data application according to any one of claims 1 to 6,
wherein the personal data application file is stored and controlled in a cloud system on the network;
wherein the application file open program module and the application file close program module are configured to be installed in a smart phone held by the person who is the holder of the personal data or can be available as the application service provider system managed in the cloud system;
wherein the application file editing program module is configured to be installed in the other computer resource held by the person using the other computer resource via the network or can be available as the application service provider system managed in the cloud system.

9. A personal data application according to any one of claims 1 to 8,
wherein the personal data application file is controlled in individual folders in individual units;
each personal folder available in the personal data application which each personal folder includes a personal folder open secret code for opening each personal folder by the personal data application and a personal folder close secret code for closing each personal folder normally by the application.

10. A personal data application according to any one of claims 1 to 9,
wherein the personal data application file is an electronic administration-related file indicating the content of the administration record information or the qualification information of the user individual, the personal data application is an electronic administration service application, the editing person is an administration person who edits the electronic administration-related file, and the other computer resource is an electronic administration-related file management system used by the administration person.

11. A personal data application according to any one of claims 1 to 9,
wherein the personal data application file is an electronic medical record file of a patient individual, the personal data application is an electronic medical chart service application of the patient individual, the editing person is a medical worker, and the other computer resource is a medical institution system used by the medical person.

12. A personal data application according to any one of claims 1 to 9,
wherein the personal data application file is an electronic medicine handbook file of a patient individual, the personal data application is an electronic medicine handbook file management service application of the patient, the editing person is a pharmacist, and the other computer resource is a dispensing pharmacy system used by the pharmacist.

13. A personal data application according to any one of claims 1 to 9,
wherein the personal data application file is an electronic insurance certificate file of an insured person, the personal data application is an electronic insurance certificate service application of the insured person, the editing person is a medical person, and the other computer resource is a medical institution system used by the medical person.

14. A personal data application according to any one of claims 1 to 9,
wherein the personal data application file is an electronic driver's license file of a driver's individual, the personal data application is an driver's license service application of the driver, and the editing person is an administration person who edits data of the electronic driver's license, and the other computer resource is an electronic driver's license management system used by the administration person.

15. A personal data application according to any one of claims 1 to 9,
wherein the personal data application file is an individual electronic passport file, the personal data application is an immigration management service application, and the editing person is an immigration management person who performs an immigration management for editing data of the electronic passport, and the other computer resource is an electronic passport management system used by an immigration management person.

16. A method for controlling a personal data application available in a computer system for operating a personal data application file, comprising:
setting an open secret code for opening each personal data application file by the application and a close secret code for closing each personal data application file normally by the personal data application,
performing an application file open processing for performing authentication between an input code and the open secret code, and opening the personal data application file under the condition that the input code is matched with the open secret code;
accepting and performing an application file edit processing for editing operation of data of the opened personal data application file from other computer resource via the network;
performing an application file close processing for performing authentication between an input code and the close secret code, and settling the data edition by the application file edit processing and closing the personal data application file under the condition that the input code is matched with the close secret code.
